# EUROPEAN PATENT APPLICATION

(11) **EP 1 206 064 A1**
(43) Date of publication of application: **15.05.2002**
(21) Application number: 00309987.6
(22) Date of filing: 09.11.2000
(51) Int. Cl.: H04L 7/033

(54) **Method and device for synchronising bit signals**

(71) Applicant: LUCENT TECHNOLOGIES INC., Murray Hill, New Jersey 07974-0636 (US)
(72) Inventor: Smets, Robert C.J., 1381XV Weesp (NL); Steenbergen, Cornelis A.M., 3723 RG Bilthoven (NL)
(74) Representative: Watts, Christopher Malcolm Kelway, Dr.

(57) **Abstract**

A bit slot synchroniser device including: a signal input port (52) for receiving a binary source signal; a clock input port (51) for receiving a clock signal, and a clock output port (54) for transmitting said clock signal; all ports being connected to synchroniser means (1) for synchronising said source signal and said dock signal, characterised in that said synchroniser means (1) include a number of cascaded partial synchronisation section (2,2',2") each section including: an input port (55) for receiving an input clock signal; a shifter device (3) connected to the input port for generating at least one shifted clock signal by shifting the phase of an input clock signal with a predetermined phase shift;
a selection device (4) connected to the shifter device for selecting a selected clock signal from said input clock signal and said shifted clock signal based on a predetermined selecting criterion, and an output port (56) connected to the selection device for transmitting the selected dock signal further.

## Description

The invention relates to a bit slot synchroniser device including: a signal input port for receiving a binary source signal; a clock input port for receiving a clock signal, and a dock output port for transmitting said clock signal; all ports being connected to synchroniser means for synchronising said source signal and said dock signal. The invention further relates to a method for synchronising a source signal with a clock signal, a receiver device including a bit slot synchroniser device according to the invention and an Optical Line Termination device including such a receiver device.

In a Passive Optical Network (PON) the central network element is an Optical Line Termination device (OLT). Optical Network Termination devices (ONTs) are connected to this OLT. The OLT, located e.g. at a central office, sends data downstream to the ONTs, located e.g. at a subscriber's premises. The ONTs send data upstream to the OLT whereafter the OLT passes the data to higher network layers.

Data units sent upstream by different ONTs may collide and error-free detection is then no longer possible. To avoid this a Medium Access Control (MAC) protocol is designed allowing ONTs to send data upstream in such a way that collisions at the OLT will not occur. A gap between data units travelling upstream acts as a buffer against time jitter.

The data units arriving at the OLT have random phases compared to the internal clock of the OLT. The frequency of this internal clock may also deviate from the bit rate within certain accuracy limits. Therefore, phase-synchronisation between the data and the internal clock is required. In general, the phase is to be synchronised by aligning the edges of a received source signal (with random phase) to a reference clock signal of the OLT.

The device accommodating this synchronising functionality is called a bit slot synchroniser device (BSS). A BSS can be employed in receivers of all packet-based transmission systems, like for example ATM, IP and Ethernet. A BSS can further be applied in networks of any connection type, such as coax cable, optical fibre or wireless.

BSS's are known from optical data transmission, for example from S. Bauer et. al: "*Ultra-Fast Locking Optical Clock For IP Packets Switching Applications",* paper TuF5 at OFC2000, Baltimore, USA (2000) and Yusuke Ota et. al: *"High-Speed, Burst-Mode, Packet Capable Optical Receiver And Instantaneous Clock Recovery For Optical Bus Operation*", Journal of Lightwave Technology, vol. 10, no 2, February 1992.

However, these known BSS's are disadvantageous because of the application specific devices used therein. For instance, the 'Bauer' BSS uses a Distributed Feedback (DFB) Laser and the Yusuke' BSS uses a so called "12 GHz f_{T} Bipolar Enhanced Self Aligned Technology" preamplifier made for the specific synchroniser device. Therefore, mass production of devices with substantially the same performance properties is difficult. Furthermore, in the known BSS's the accuracy of the synchronisation cannot be adapted without changing significant changes in the device design.

The invention seeks to solve these problems. Therefore, it is a goal of the invention to provide a synchroniser device that uses commonly available components and which may easily be adapted to obtain a predetermined accuracy. In order to achieve the set goal, a synchroniser device as of the above type according to the invention is characterised in that said synchroniser means include a number of cascaded partial synchronisation sections each section including: an input port for receiving an input clock signal; a shifter device connected to the input port for generating at least one shifted clock signal by shifting the phase of an input clock signal with a predetermined phase shift; a selection device connected to the shifter device for selecting a selected dock signal from said input clock signal and said shifted clock signal based on a predetermined selecting criterion, and an output port connected to the selection device for transmitting the selected clock signal further.

A synchroniser device according to the invention can be manufactured using standard commercially available components like for example a D-type flip-flop, a multiplexer (MUX) device, an AND gate and some delay devices, as will be explained below in more detail. Furthermore, the device can easily be adapted to a desired accuracy by adding or removing partial synchronisation sections, whereby the maximum remaining phase difference, which is a measure of the synchronisation accuracy, between the (synchronised) clock signal and the source signal is exponentially reduced.

Particularly advantageous elaborations of the invention are set forth in the dependent claims.

Further details, aspects and embodiments of the invention will be described with reference to the figures in the attached drawing.
Fig. 1 diagrammatically shows examples of source signals and clock signals in successive steps of an example of a method according to the invention.
Fig. 2 diagrammatically shows an example of an embodiment of a synchroniser device according to the invention.
Fig. 3 diagrammatically shows an example of a partial synchroniser section of the BSS shown in fig, 2 in more detail.
Fig. 4 diagrammatically shows an OLT including the synchroniser device shown in fig. 2.

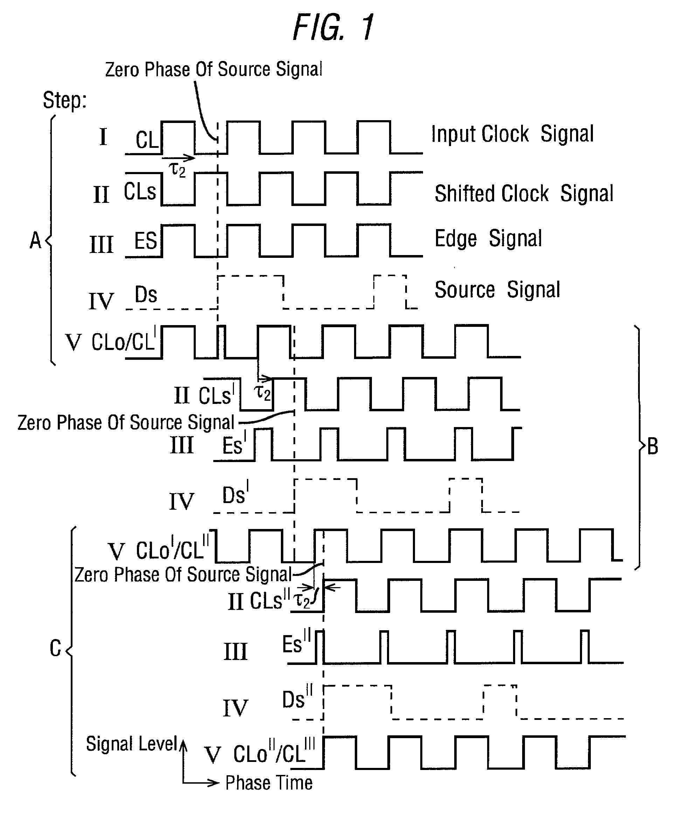

An example of a method for synchronising a source signal with a clock signal according to the invention will be explained with reference to fig. 1. In this example, the method includes three partial synchronisation steps A,B,C for synchronising the clock signal with the source signal. In each of the steps A,B,C the signals are synchronised to some extent and in a following step the signals are synchronised further. Advantageously, the steps are similar to each other, such that the second, third, ... etc. steps in fact may be regarded as steps of the preceding steps, each steps decreasing the maximum phase difference by a factor 2. The use of partial synchronisation steps enables simple adaption of the desired synchronisation accuracy by simply increasing or decreasing the number of steps, whereby the accuracy of the synchronisation is increased or decreased correspondingly.

Each of the steps A,B,C, include the substeps of receiving an input clock signal CL in substep I, shifting the input clock signal in substep II, whereby a shifted clock signal Cls is generated and selecting in further substeps III-V an output clock signal CLO from the available clock signals. The selecting substeps III-V include forming an edge signal ES in substep III which edge signal changes from an original binary state to the opposite binary state if one of the clock signals turns upwards. This switching of the edge signal in substep III enables determination of the 0 degree phase moment of the clock signals. After the switching of the edge signal in substep III, a delay flip-flop function is performed in substep IV, as will be explained further on, whereby the clock signal with the 0 phase moment nearest to the 0 phase of the source signal (the source signal is indicated with the dotted line in fig. 1) is determined. After performing the delay flip-flop function in substep IV, the nearest clock signal is selected in substep V and used as the input clock signal for a possible following step of a partial synchronising step.

Each of the steps of a partial synchronisation step is started with receiving an input clock signal in substep I. In fig. 1 the input clock signal CL is a block shaped binary signal. For the sake of clarity, it is observed that in a periodic signal a single period takes 360 degrees phase-time. In a symmetrical binary block shaped signal both the up state and the down state occupy a phase time interval of 180 degrees. If the phase time is chosen to be 0 at the start of the up state or binary one, i.e. a rising edge, the change to the down state or binary zero will occur at 180 degrees and the return to the up state will occur at 360 degrees.

The phase of this input clock signal is shifted as shown at II with a phase shift τ₂ in order to generate at least one shifted clock signal Cls, as shown in fig. 1. In the example embodiment a single shifted clock signal Cls is generated in the shifting steps II of each of the partial synchronisation steps A,B,C and the phase shift τ₂ is set to half the maximum phase difference between the source signal and the input clock signal.

After shifting step II, an output clock signal is selected from the now available dock signals (the input clock signal and the shifted clock signal). This selection takes place in substeps III-V and is based on a suitable predetermined selection criterion. In the shown example the clock signal with the upward edge (being the zero phase moment) nearest and prior to the upward edge of the source signal is selected as the most appropriate output clock signal. After selecting the output clock signal in substeps III-V, this clock signal is transmitted for further use.

In the present example, the selected clock signal of a previous partial synchronisation step is used as an input clock signal for a next step. The input clock signal is already synchronised with the source signal to a certain extend in the previous step, so the next step will provide an increased accuracy. According to the invention the substeps of receiving I, shifting II and selecting III-V are repeated as long as the phase difference between the selected clock signal and the source signal is larger than a predetermined accuracy value. Let it be assumed that the desired accuracy is 45 degrees. In general, in the first partial synchronisation step A the source signal differs at most 360 degrees in phase with the input clock signal, since it is substantially random with respect to the clock signal. The input clock signal is then shifted in substep II with a phase shift τ₂ of 180 degrees to obtain a shifted clock signal. The clock signal of the thus obtained two clock signals with the phase nearest to the phase of the source signal clock differs at most 180 degrees in phase from the source signal. Therefore, for the following, second partial synchronisation step B the phase shift τ₂' for obtaining a shifted dock signal is set to 90 degrees. For the same reason, in the third partial synchronisation step C the phase shift τ₂" is set to 45 degrees. Thus, in the method of fig. 1 the clock signal and the source signal are synchronised in three similar steps with an accuracy of 45 degrees. In each step the shifted clock signal is obtained by shifting the clock signal selected in the preceding step over one half of the maximum phase difference of the source signal and the clock signal of the preceding step.

If the desired synchronisation accuracy in the example is increased, for example 4 times to 11.25 degrees, this could simply be achieved by repeating the partial synchronisation steps and thus the substeps II-V two further times. For N sections the accuracy will be higher than 360°/N or the remaining mismatch will be <360°/N.

The combination of generating a shifted clock signal by shifting the phase of an input dock signal over half of the maximum phase difference between the input clock signal and the source signal and then selecting of both clock signals that clock signal having a phase nearest to the source signal does not only allow to adjust the synchronisation accuracy in a simple way, but does also provide a synchronisation method requiring the least number of steps as an average.

However, it should be apparent that the invention is not limited to the specific selection method described above, but includes other methods as well. For example, in each step a first and a second shifted clock signal might be generated, whereafter that clock signal of the three available clock signals (the input clock signal, the first shifted clock signal and the second shifted clock signal) is selected which is nearest to the phase of the data signal.

In the example method, the selection of the output signal is performed by switching in substep III an edge signal from a binary state to the opposite binary state if one of the clock signal turns upwards. Hereby, the moment of turning upwards of the dock signals, for which the phase is 0 degrees, is detected. Since the edge signal is initiated with a low state directly before turning of the input clock signal, the zero phase moment of the input clock signal and the delayed clock signal are determined. Thereafter a step IV of generating a delay flip-flop signal Ds is performed. This is done by executing a delay flip-flop function. This function is performed with the edge signal ES as a delay flip-flop input signal and the source signal as a flip-flop clock signal. If the delay flip-flop output signal Ds is a binary 1: the input clock signal Ck is selected as the output clock signal Clo in selecting step V; if the delay flip-flop output signal Ds is a binary 0: the shifted clock signal Cls is selected as the output clock signal Clo in selecting step V.

For the sake of clarity it is observed that a delay flip-flop has a truth table as is shown in table 1.

**Table 1**

| D | Clk | Q |
|---|---|---|
| 0 | ↑ | 0 reset |
| 1 | ↑ | 1 set |

The delay flip-flop function allows to determine which clock signal has the phase nearest to the source signal. This is achieved since if the edge signal is 1, the phase of the input dock signal is known to be between 0 and half of the maximum phase difference and if the edge signal is 0, the phase of the input signal is known to be larger than half of the maximum phase difference while the phase of the shifted dock signal is between 0 and half of the maximum phase difference. So at the moment the source signal turns to 1, the phase of the source signal is 0, and the nearest of the clock signals can be detected and selected in the selecting step V.

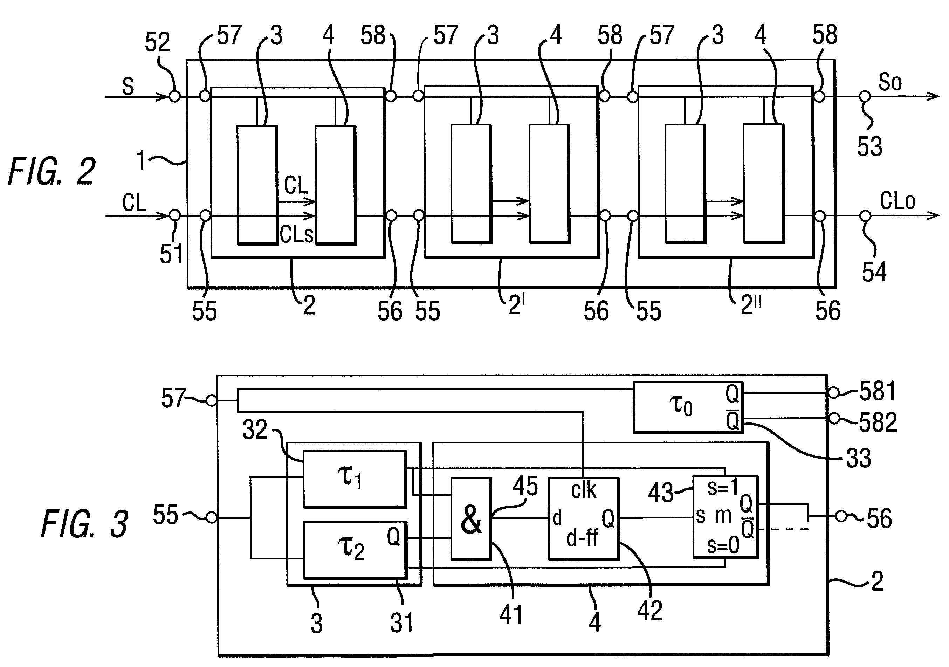

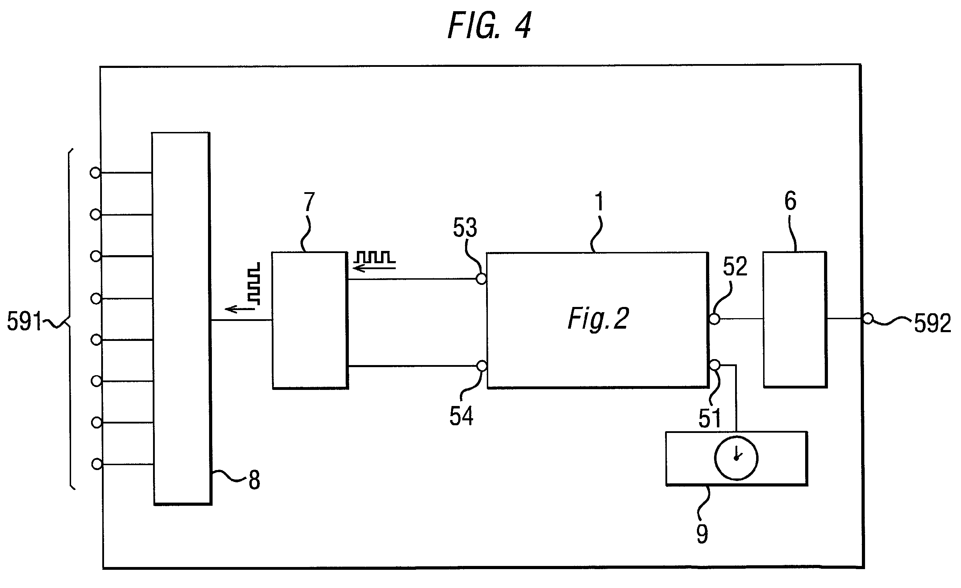

Figure 2 shows an example of an embodiment of a BSS according to the invention. The BSS includes multiple cascaded sections, in this example three sections, each including a circuit arranged to delay the clock signal compared to a received data signal (source signal) between the clock signal and the data signal. The BSS includes a signal input port 52 for receiving a source signal S and a clock input port 51 for receiving a clock signal Cl. Synchroniser means 1 for synchronising the source signal and the clock signal, are connected to both input ports 51,52. The respective output signals So,Clo are transmitted further via signal output port 53 and clock output port 54, These output ports 53,54 are connected to the synchroniser means 1.

The synchroniser means 1 of the BSS in this example include three cascaded partial synchronisation sections 2,2',2". Each of the partial synchroniser sections 2,2',2" include a partial synchronisation device which synchronises the phases of the clock signal and the source signal within a certain predetermined accuracy, It should be apparent that the invention is not limited to the shown number of partial synchroniser sections 2,2',2". Depending on the specific requirements of the BSS the number of sections may be higher or lower than the number shown in fig. 2. By using such cascaded partial synchroniser sections it is possible to adapt the BSS to changing requirements by simply adding or removing sections 2,2',2'', ....

Each of the partial synchroniser devices include an input port 55 for receiving an input clock signal. In the shown example, the input ports 55 of the second and third partial synchroniser devices 2',2" are connected to the output port 56 of a preceding partial synchroniser device 2.

Connected to the input port 55 is a phase shifter device 3. This shifter device 3 generates a shifted clock signal by shifting the phase of an input clock signal with a predetermined phase shift.

A selection device 4 is connected to the phase shifter device 3 for selecting a selected clock signal from the original clock signal Cl and the shifted dock signal Cls. For making the selection, a suitable predetermined selecting criterion is applied and implemented in the selection device, as will be explained in more detail with reference to fig. 3 below. The selection device 4 has an output port 56. This output port 56 is used to make the selected clock signal available for further use. The sections 2, 2',2" are further provided with a source signal input port 57 and a source signal output port 58 for the source signal.

The selection device 4 is a binary selection device for selecting from the clock signals Cl and Cls the clock signal having the smallest phase difference with the source signal S. Hereby the maximum phase difference after each selection is known to be half the maximum phase difference before shifting, since the shifted clock signal is shifted by half the maximum phase difference, as is explained above.

Of each partial synchronisation section the clock output port 56 is connected to the dock input port 55 of a next partial synchronisation section. The input port 55 of the first partial synchronisation section 2 is connected to the clock input port 51.

In fig. 3 an example of a partial synchronisation section 2,2',2" of the BSS of fig. 2 is shown in more detail. In such section 2, the input clock signal is fed from the input port 55 into a phase shifter device 3. In this device, a shifted clock signal is generated by delay device 31 by shifting the input dock signal with a phase shift τ₂. The delay device 32 delays the clock signal with a delay τ₁. In general, the phase shifts can have any value as long as τ₁-τ₂ is the desired phase shift, i.e. half the maximum phase difference. τ₁ may be zero.

Both clock signals are transmitted into the selection device 4, where they are supplied to AND gate 41, which AND gate has a truth table as is shown in table 2.

**Table 2**

| input 1 | input 2 | Q |
|---|---|---|
| ↑ | 0,1 | -Q |
| 0,1 | ↑ | -Q |
| ↑ | 0,1 | Q |
| 0,1 | ↑ | Q |

In this example signals Cl and Cls are used as input signals for the AND gate. The output 45 of the AND gate is connected to the d port of delay flip-flop or edge triggered bistable 42. The input source signal received at the signal input port 57 is used as a dock signal for the d-flip-flop 42. The flip-flop is triggered by a rising edge of a signal at the clock port clk. The output signal of the d-flip-flop is transmitted from the flip-flop Q port to a multiplexer device 43. The multiplexer has selection terminals one of which receives the original clock signal (possibly delayed by τ₁) and another one of which receives the shifted clock signal. If the output of the d-flip-flop represents a 0, the shifted clock signal is nearer to the source signal and thus the shifted clock signal is selected as the output signal of the multiplexer device 43. If the input dock signal is the nearest of the clock signal, the output of the d-flip-flop device 42 represents a 1 and the original input clock signal is selected as output signal.

The input source signal is delayed by delay device 33 with a delay τ₀, in order to compensate for delays occurring in the sections. This delay is set in such manner that no additional phase shift occurs by the processing in the partial synchroniser section if the phase difference is already within the desired accuracy.

A BSS as described can be implemented in a receiver device. Such a device includes an input port, a signal detector connected to the input port and an output port connected to the bit slot synchroniser device. The signal detector would be connected to the bit slot synchroniser device.

Such a receiver device can be implemented in any data communication device or network node where data units having an unknown phase are received from multiple sources. Such a device may for example be an Optical Line Termination, a router or a network server computer. In such a network node the dock of the network node and the received source data units have to be synchronised. The network may be a PON as described previously, however, it should be apparent that the invention is not limited to the mentioned types of nodes and networks.

An example of an embodiment of an OLT according to the invention is shown in fig. 4. The shown OLT includes a port 592 at an ONT side of the OLT and a multiple of ports 591 at the other side of the OLT. Data units from the ONTs are received at the port 592. These data units are optical signals. The signal detection device or burst mode receiver device 6 detects these optical signals and converts them into electrical signals and transmits the resulting electrical data units to a BSS 1. In the shown OLT the BSS shown in fig. 2 is applied. The BSS 1 is connected with its clock input port 51 to a clock 9 of the OLT. The BSS synchronises the phase of the clock with the source signal, in the manner explained above. Thereafter the synchronised signals are transmitted to a serial to parallel converter device 7. Converted signals, now parallel, are fed into a line function device 8. This line function device performs other function of the OLT like selecting the appropriate ones of the ports 591 for each data unit.

It should be apparent to a skilled person that the invention is not limited to application in a physical device but can likewise be applied in a logical device of a more abstract kind, for example in software code instructions loaded in a device able to perform the code instructions. Further various modifications of the BSS and/or the sections thereof will be obvious to the skilled person after the above description. For example, in fig. 3 delay τ₁ may be deleted. As an alternative a first delay τ₁ₐ may be used for delaying the input dock signal before it is connected to the AND gate 41 and a second delay τ_{1b} may be inserted between dock input 55 and a first selection input of the multiplexer 43. in a similar manner a first delay τ₂ₐ may be applied for obtaining the shifted clock signal Cls while a second delay τ_{2b} may be applied between clock input 55 and a second selection input of the multiplexer. Thus the synchronisation accuracy and the speed at which said accuracy is achieved are made independent from each other.

## Claims

1. A bit slot synchroniser device including:
- a signal input port (52) for receiving a binary source signal;
- a clock input port (51) for receiving a clock signal, and
- a clock output port (54) for transmitting said clock signal; all ports being connected to
- synchroniser means (1) for synchronising said source signal and said clock signal,
**characterised in that,**
said synchroniser means (1) include a number of cascaded partial synchronisation sections (2,2',2") each section including:
- an input port (55) for receiving an input clock signal;
- a shifter device (3) connected to the input port for generating at least one shifted dock signal by shifting the phase of an input clock signal with a predetermined phase shift;
- a selection device (4) connected to the shifter device for selecting a selected clock signal from said input clock signal and said shifted clock signal based on a predetermined selecting criterion, and
- an output port (56) connected to the selection device for transmitting the selected clock signal further.

2. A bit slot synchronised device as is claimed in claim 1, **characterised in that** the predetermined phase shift of a shifted device is a predetermined fraction of the phase shift occurring in a preceding section.

3. A bit slot synchroniser device as claimed in claim 1, **characterised in that** said fraction is substantially 50%.

4. A bit slot synchroniser device as claimed in any one of the claims 1-3, wherein said selection device (4) is arranged for selecting from said input clock signal and said shifted clock signal the dock signal with the smallest phase difference with said source signal.

5. A bit slot synchroniser device as claimed in any one of the claims 1-4, wherein the input port (55) of a first partial synchronisation section (2,2',2") is connected to the clock input port (51) and a following partial synchronisation section (2',2") is connected with its input port (55) to the output port (56) of a previous partial synchronisation section (2).

6. A bit slot synchroniser device as claimed in any one of the preceding claims, wherein said shifter device (3) is set to shift the phase of the input clock signal with half the maximum phase difference between the input dock signal and the source signal.

7. A bit slot synchroniser device as claimed in any one of the preceding claims, wherein said selection device includes:
an AND gate (41) for determining the zero phase of the clock signals, connected to said shifter device (3) for receiving the shifted dock signal and communicatively connected to the clock input port (55) for receiving the input clock signal;
a delay flip-flop (42) connected with its D-port (d) to the output of said AND gate (41), said d-flip-flop having said input source signal as a dock signal,
a multiplexer device (43) having a control terminal (s) connected to an output of said delay flip-flop (42), said multiplexer device (43) further being connected with an output terminal (Q) to said dock output port (56), and said multiplexer device (43) having selection terminal connected to said shifter device (3) and said clock input port (55) for transmitting the shifted clock signal if said flip-flop output terminal (Q) transmits a binary zero signal and transmitting said input clock signal if said flip-flop output transmits a binary one signal.

8. A method for synchronising a source signal with a clock signal including the steps of:
- generating (II) at least one shifted clock signal by shifting the phase of an input clock signal with a first predetermined phase shift;
- selecting (III-V) a selected clock signal from said at least one shifted clock signal and the clock signal based on predetermined selection criterion,
- transmitting the selected clock signal further, and
if the phase difference between the selected clock signal and the source signal is larger than a predetermined value repeating at least once the synchronising steps of:
- generating (II) at least one shifted dock signal using a second predetermined phase shift; and
- selecting (III-V) the selected clock signal.

9. A method as claimed in claim 8, whereby the selected dock signal is obtained by determining (III-IV) a nearest clock signal having the smallest phase difference between the clock signal and the source signal and selecting (V) said nearest clock signal.

10. A method as claimed in any one of the claims 8-9, whereby the selected clock signal of a previous step is used as an input dock signal for a following step of: generating II at least one shifted dock signal; comparing III-IV the source signal with at least one of the dock signals, and determining V the selected clock signal.

11. A method as is claimed in any one of the claims 8-10, whereby in each synchronising step a shifted dock signal is generated by shifting (II) the phase of the input dock signal by half of the maximum phase difference between the input clock signal and the source signal, for that step.

12. A method as is claimed in any one of the claims 8-11, whereby the selected clock signal is selected by:
switching (III) an edge signal from an original binary state to the opposite binary state if one of the clock signals turns upwards;
generating (IV) a delay flip-flop signal by performing a delay flip-flop function with said edge signal as a delay flip-flop input signal and said source signal as a flip-flop clock signal;
if the delay flip-flop signal is a binary 1;
selecting (V) the dock signal as the output clock signal;
if the delay flip-flop signal is a binary 0;
selecting (V) the shifted clock signal as the output clock signal.

13. A receiver device, including an input port, a signal detector connected to the input port, a bit slot synchroniser device as is claimed in any one of the claims 1-5 and an output port connected to the bit slot synchroniser device.

14. A receiver device as claimed in claim 12, wherein said signal detector is an opto-electrical converter device for converting optical signals into electrical signals.

15. A data communication device including an input port, a receiver device as claimed in claims 13-14, a transmitter device, and an output port connected to the transmitter device.

16. An Optical Line Termination device including:
at least one input port (592),
a burst mode receiver device (6) connected to said input port (592),
a serial to parallel converter device (7) connected to
a line function device (8) for performing line termination functions, which line function device (8) is connected to
at least one output port (591),
**characterised in that**,
said Optical Line Termination device further includes a bit slot synchroniser device (1,51-54) according to any of the claims 1-7, said synchroniser device (1,51-54) being connected with a source signal input port (52) to said burst mode receiver device (6), said synchroniser device (1,51-54) further being connected with an output port (53) to said serial to parallel converter device (7) and with a clock input port (51) to a clock signal generator device (9).
